# EUROPÄISCHE PATENTSCHRIFT

(11) **EP 2 739 889 B1**
(45) Veröffentlichungstag und Bekanntmachung des Hinweises auf die Patenterteilung: **15.03.2017**
(21) Anmeldenummer: 12733459.7
(22) Anmeldetag: 02.07.2012
(51) Int. Cl.: F16K 31/06

(54) **DRUCKREGELSYSTEM MIT EINEM ELEKTROMAGNETISCHEN DRUCKREGELVENTIL ZUR ANSTEUERUNG VON DRUCKGESTEUERTEN KOMPONENTEN IM KFZ-BEREICH**
PRESSURE CONTROL SYSTEM WITH AN ELECTROMAGNETIC PRESSURE-REGULATING VALVE FOR CONTROLLING PRESSURE-CONTROLLED COMPONENTS IN MOTOR VEHICLES
SYSTÈME DE COMMANDE DE PRESSION AVEC UNE SOUPAPE DE RÉGULATION DE PRESSION ÉLECTROMAGNÉTIQUE POUR LA COMMANDE DE COMPOSANTS COMMANDÉS PAR PRESSION DANS LE DOMAINE AUTOMOBILE

(30) Priorität: 03.08.2011 DE 102011109207
(43) Veröffentlichungstag der Anmeldung: 11.06.2014
(73) Patentinhaber: Pierburg GmbH, 41460 Neuss (DE)
(72) Erfinder: BUSE, Werner, 41564 Kaarst (DE); FERNANDES, Alvito, 51377 Leverkusen (DE); HERMANN, Max, 41472 Neuss (DE); MORAWIETZ, Roman, 41564 Kaarst (DE)
(74) Vertreter: Patentanwälte ter Smitten Eberlein Rütten Partnerschaftsgesellschaft
(86) Internationale Anmeldenummer: PCT/EP2012/062804
(87) Internationale Veröffentlichungsnummer: WO 2013/017352

(56) Entgegenhaltungen:
- WO-A1-2004/044932
- DE-C1- 4 110 003
- FR-A1- 2 890 431
- US-A- 4 832 313
- US-A1- 2009 294 712

## Beschreibung

Die Erfindung betrifft ein Druckregelsystem im Kfz-Bereich mit einer Druckquelle, einer druckgesteuerten Komponente und einer Druckquelle mit einem festen Druckniveau, wie beispielsweise Atmosphärendruck, einer Motorsteuerung und einem elektromagnetischen Druckregelventil zur Ansteuerung der druckgesteuerten Komponente.

Druckregelventile für Druckregelsysteme sind hinlänglich bekannt, So beschreiben US 4,843,313 A, FR 2 890 431 A1, DE 41 10 003 C1, WO 2004/044932 A1 und die US 2009/294712 A1 Druckregelventile für Druckregelsysteme mit Verbraucher- und Quellenanschlüssen, wobei jeweils die fluidische Verbindung zwischen den Verbraucher- und Quellenanschlüssen durch das Ventilglied unterbrechbar ist. Insbesondere benötigt man diese Druckregelventile bei der flexiblen Steuerung eines Wastegates. Verbrennungsmotor und Turbolader sind bekannter Weise keine idealen Partner. Der Luftdurchsatz der Ansaugluft des Verbrennungsmotors verhält sich proportional zu einer Erhöhung der Drehzahl. Beim Turbolader liegt ein grundsätzlich anderes Verhältnis vor. Hier steigt der Luftdurchsatz nicht proportional, sondern quadratisch in Bezug auf die Turbodrehzahl. Um zu verhindern, dass ein zu hoher Ladedruck bei hohen Drehzahlen den Motor beschädigt oder zerstört, wurde ein Bypass im Turbinengehäuse vorgesehen, der Wastegate genannt wird. Das Wastegate hat im Wesentlichen zwei Endpositionen: geschlossen und geöffnet. In geschlossener Position des Wastegates weist die Kombination von Motor und Turbolader das gleiche Verhalten auf wie das System ohne Wastegate. Um den Motor bei zu hohen Drehzahlen vor einer Zerstörung durch einen zu hohen Ladedruck zu schützen, wird das Wastegate geöffnet, so dass der Turbolader bypassiert werden kann und der Ladedruck gesenkt werden kann. Da jedoch insbesondere beim OttoMotor für unterschiedliche Lastzustände in den Kennfeldbereichen des Motors unterschiedliche Ladedrücke benötigt werden, um eine optimale Verbrennung zu gewährleisten, ist eine flexible Steuerung des Wastegates für die verschiedenen Drehzahlen notwendig. Zwischen den beiden genannten Endpositionen gibt es dementsprechend einen großen Arbeitsbereich des Wastegates, abhängig von Drehzahl und Motorleistung. Im Wastegate kann beispielsweise eine drehbare Klappe angeordnet sein, die anzusteuern ist. Da der Bauraum im Bereich des Turboladers sehr heiß ist, werden insbesondere pneumatische Antriebe mit geringer Temperaturempfindlichkeit eingesetzt. Ein Aktuator der im Wastegate befindlichen Klappe ist dementsprechend als druckgesteuerte Druckdose ausgeführt. Eine in der Druckdose angeordnete Feder hält dabei die Klappe im nicht angesteuerten Zustand in einer Geschlossen-Stellung.

Zur variablen Ansteuerung des Aktuators benötigt man nun ein Druckregelventil, das beim Vorliegen eines zu hohen Ladedrucks die Klappe im Wastegate gegen die Vorspannkraft der im Aktuator angeordneten Feder öffnet. Derartige Druckregelventile sind häufig als elektromagnetische Druckregelventile ausgeführt, mit einem ersten Anschluss, an dem der Ladedruck des Turboladers anliegt, einem zweiten Anschluss, der mit der druckgesteuerten Komponente, beispielsweise der Druckdose, verbunden ist und einem dritten Anschluss, der häufig mit der Atmosphäre verbunden ist und dementsprechend Atmosphärendruck aufweist. Aufgrund der in einer Motorsteuerung hinterlegten Kennlinienfelder der Verbrennungskraftmaschine liegt für jeden Lastzustand und Drehzahlbereich ein Ladedruck vor, der ausgehend vom aktuellen Ladedruck als Mischdruck von Ladedruck und Atmosphärendruck am zweiten Anschluss vorliegt. Hierbei kann die Höhe dieses Mischdruckes am zweiten Anschluss insbesondere durch die Schaltfrequenz und Modulation des elektromagnetischen Antriebs beeinflusst werden. Derzeit sind bei den bekannten Druckregelventilen Schaltfrequenzen von bis zu 35 Hz üblich. Es liegen in diesem Fall also 35 sogenannte Zeitfenster in einer Sekunde vor, wobei dieses Zeitfenster mit der eingesetzten Pulsweitenrnodulation unterschiedlich lang offen oder geschlossen gehalten werden kann. Bei einem Tastverhältnis von 100 % wird das Zeitfenster also über den gesamten Zeitraum in die Offen-Stellung versetzt, so dass am zweiten Anschluss der aktuelle Ladedruck des Turboladers anliegt.

Um eine noch präzisere Ladedruckregelung zu ermöglichen, um den Verbrennungsprozess zu optimieren und damit den Kraftstoffverbrauch und die Emissionswerte zu senken, ist eine höhere Schaltfrequenz von ca. 300 Hz gewünscht. Obwohl durch die eingesetzten elektromagnetischen Antriebe eine derartige Schaltfrequenz erreicht werden könnte, sind insbesondere die bekannten Druckregelventile, die zwei Ventilsitze aufweisen, ein erster, um die Verbindung zwischen dem dritten Anschluss und dem ersten und zweiten Anschluss zu unterbrechen und ein zweiter Ventilsitz, um die Verbindung zwischen Ladedruckanschluss und zweitem und drittem Anschluss zu unterbrechen, nicht ausgelegt. Eine derartige hohe Frequenz würde das Schwingverhalten dieser bekannten Druckregelventile zu negativ beeinflussen und würde die Lebensdauer des Ventils gefährden.

Aufgabe der Erfindung ist es daher, ein Druckregelventil zu schaffen, das eine hohe Schaltfrequenz, von beispielsweise 300 Hz, auf einfache und kostengünstige Weise bereitstellen kann.

Diese Aufgabe wird durch die Erfindung dadurch gelöst, dass ein Druckregelsystem mit einem Druckregelventil mit einem Gehäuse vorgesehen ist, das einen ersten, mit der Druckquelle verbindbaren Anschluss, einen zweiten, mit der druckgesteuerten Komponente verbindbaren Anschluss und einen dritten, mit einem festen Druckniveau, beispielsweise Atmosphärendruck, verbindbaren Anschluss, mindestens einen Ventilsitz sowie einen elektromagnetischen Antrieb aufweist, wobei der elektromagnetische Antrieb aus einer auf einem Spulenträger gewickelten Spule, einem Anker, einem Kern und einer elektromagnetischen Rückschlusseinrichtung aufgebaut ist, wobei der Anker zwischen zwei Endlagen beweglich gelagert ist und zumindest indirekt auf ein Ventilverschlussglied einwirkt, wobei Vorspannmittel vorgesehen sind, die den Anker und damit das Ventilverschlussglied im nicht bestromten Zustand in einer Fail-Safe-Stellung an dem Ventilsitz derart positionieren, das eine Verbindung vom dritten Anschluss zum ersten und zweiten Anschluss verschlossen ist, wobei der erste und der zweite Anschluss fluidisch miteinander verbunden sind, wobei der eine Ventilsitz derart ausgeführt ist, dass dieser über einen Fluidkanal mit dem ersten und zweiten Anschluss verbunden ist, derart, dass der erste und der zweite Anschluss in jedem Betriebszustand in fluidischer Verbindung stehen, wobei der Anker derart ansteuerbar ist, dass dieser mittels der Motorsteuerung in jeder Position stufenlos zwischen den zwei Endlagen einstellbar ist, wobei das Ventilverschlussglied eine erste Axialfläche zur Anlage am Ventilsitz und eine zweite Axialfläche, die beabstandet von der ersten Axialfläche im Fluidkanal angeordnet ist, aufweist, wobei die zweite Axialfläche einen geringeren Durchmesser als die erste Axialfläche aufweist.Durch diese Maßnahme kann eine erheblich höhere Schaltfrequenz des Ventilverschlussgliedes erreicht werden, da lediglich eine Unterbrechung, nämlich die zwischen dem dritten Anschluss und den beiden weiteren Anschlüssen (erster und zweiter Anschluss) geschaltet werden muss.

Durch eine besondere Ausführung des Ventiverschlussgliedes wird ein plötzlicher, hoher Fluidmassendurchsatz beim Öffnen des Druckregelventils verhindert, was sich derart positive auf das Schwingverhalten des Druckregelventils auswirkt, dass keine zusätzlichen aufwendigen, die Dynamik des Druckregelventils negativ beeinflussenden Dämpfungsmaßnahmen mehr ergriffen werden müssen. Dieser Effekt wird noch verstärkt, wenn der Fluidkanal sich in einem Bereich in Richtung des Ventilsitzes aufweitet, derart, dass der Ventilsitz eine Durchströmfläche A₁ aufweist, die größer als eine Durchströmfläche A₂ des Fluidkanals zu Beginn des Bereiches ist.

Des Weiteren ist es vorteilhaft, wenn das Gehäuse im Wesentlichen zweiteilig mit einem Antriebsgehäuseteil und einem Deckelteil, das den ersten, zweiten und dritten Anschluss aufweist, ausgeführt ist, wobei zwischen den beiden Gehäuseteilen eine Membrane angeordnet ist, die das Ventilverschlussglied mit der ersten und der zweiten Axialfläche ausbildet. Diese Membrane kann insbesondere als Schutzmembran wirken, um den Elektromagnetantrieb vor Beschädigungen durch Schmutzpartikel zu schützen. Darüber hinaus ist es auch denkbar, dass die Membran an sich eine gewisse Federkraft aufweist, die als Vorspannmittel zumindest teilweise für den Anker eingesetzt werden kann.

Des Weiteren ist es vorteilhaft, wenn die Vorspannmittel eine Feder umfassen, die am Kern abgestützt ist. Hierbei können Mittel zum Einstellen der Federkraft vorgesehen sein.

Um das Modulationsverfahren möglichst genau einzusetzen, können Mittel zum Justieren der Magnetkraft vorgesehen sein, wobei die Mittel zum Justieren der Magnetkraft eine Justierschraube umfassen, die im Kern mittels eines Gewindes oder eine Rändelung angeordnet ist. Hierbei ist es aus montagetechnischer Sicht besonders sinnvoll, wenn die Mittel zum Einstellen der Federkraft auch durch die Justierschraube gebildet sind.

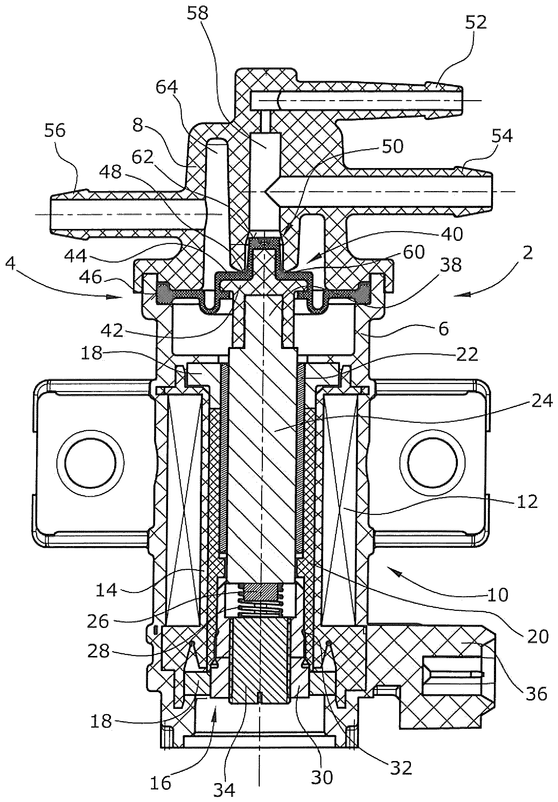

Eine Ausführungsform der Erfindung wird nachfolgend anhand der Zeichnung näher beschrieben, hierin zeigt die einzige Figur eine Schnittdarstellung eines erfindungsgemäßen elektromagnetischen Druckregelventils.

Die einzige Figur zeigt ein Druckregelventil 2 eines erfindungsgemäßen, nicht weiter dargestellten Druckregelsystems in einer Schnittdarstellung.

Das Druckregelventil 2 weist im vorliegenden Ausführungsbeispiel ein zweiteiliges Gehäuse 4 mit einem Antriebsgehäuseteil 6 und einem Deckelteil 8 auf. Das Antriebsgehäuseteil 6 umfasst einen elektromagnetischen Antrieb 10. Hierbei weist der elektromagnetische Antrieb 10 eine Spule 12 auf, die auf einen Spulenträger 14 gewickelt ist. Des Weiteren ist am vom Deckelteil 8 abgewandten Ende des elektromagnetischen Antriebs 10 ein Kern 16 in einer Rückflusseinrichtung 18 befestigt. Die Rückflusseinrichtung 18 ist auf bekannte Weise mehrteilig ausgeführt, wobei in der vorliegenden Ansicht lediglich die mit 18 gekennzeichneten Rückschlussbleche dargestellt sind. In einer an sich bekannten Zentrierhülse 20 ist eine Lagerbuchse 22 für einen beweglichen Anker 24 angeordnet. Der Anker 24 weist im vorliegenden Ausführungsbeispiel ein Ansatzstück 26 auf, auf dem eine Feder 28 angeordnet ist, die sich am Kern 16 abstützt und den Anker 24, wie noch später beschrieben wird, mit einer Vorspannkraft belastet. Das Ansatzstück 26 ist im vorliegenden Ausführungsbeispiel aus einem nicht magnetisierbaren Werkstoff, wie zum Beispiel VA-Stahl, hergestellt und dient gleichzeitig als Anschlagfläche für den Anker 24 am Kern 16. Der Kern 16 besteht im vorliegenden Ausführungsbeispiel im Wesentlichen aus einem ringförmigen Außenstück 30, das im Rückschlussblech 18 angeordnet ist und in dem Kunststoffteil 20 über Rastnaben 32 befestigt ist. Des Weiteren weist der Kern 16 eine Justierschraube 34 auf, durch die die Magnetkraft bei der Endmontage genauestens eingestellt werden kann. Im vorliegenden Ausführungsbeispiel ist mit der Justierschraube 34 auch die Vorspannkraft der Feder zu justieren. Es ist natürlich auch eine Ausführungsform denkbar, bei der ein weiteres Justierelement vorgesehen ist, um die Federkraft der Feder 28 unabhängig von der Magnetkraft zu justieren. Über einen Stecker 36 ist der elektromagnetische Antrieb 10 mit einer nicht weiter dargestellten Motorsteuerung verbunden.

Am zum Deckelteil 8 zugewandten Teil des Ankers 24 weist der Anker 24 ein zweites Ansatzstück 38 auf, auf dem ein Ventilverschlussglied 40 fixiert ist. Das Ventilverschlussglied 40 ist im vorliegenden Ausführungsbeispiel zweiteilig ausgeführt und besteht aus einem Basisteil 42, auf dem wiederum eine Membran 44 angeordnet ist, die mit ihrer Umfangsfläche 46 zwischen Deckelteil 8 und dem Antriebsgehäuseteil 6 eingeklemmt ist. Auf diese Weise ist das Antriebsgehäuseteil 6 gegen Verschmutzungen sicher geschützt. Gleichzeitig bildet die Membran 44 zusammen mit dem Basisteil 42 ein flexibles Ventilverschlussglied 40, das mit einer ersten Axialfläche 60 fluiddicht am Ventilsitzen 48 anliegt.

Das Deckelteil weist neben dem Ventilsitz 48 einen Bereich und 50, einen ersten Anschluss 52, an dem der Ladedruck eines nicht weiter dargestellten Turboladers anliegt, einen zweiten Anschluss 54, der mit einer nicht weiter dargestellten Druckdose, die eine Klappe in einem Wastegate bedient, verbunden ist und einen dritten Anschluss 56, auf, der mit der Atmosphäre verbunden Ist. Die Anschlüsse 52 und 54 sind über einen Fluidkanal 58 miteinander verbunden, an dessen Ende der Ventilsitz 48 angeordnet ist. Eine zweite Axialfläche 62 des Ventilverschlussgliedes 40 mit einem geringeren Durchmesser als die erste Axialfläche 60 reicht in den Fluidkanal 58 hinein. Desweiteren weitet sich der Fluidkanal 58 in dem Bereich 50 in Richtung des Ventilsitzes 48 auf, derart, dass der Ventilsitz 48 eine Durchströmfläche A₁ aufweist, die größer als eine Durchströmfläche A₂ des Fluidkanals 58 zu Beginn des Bereiches 50 ist. Auf diese Weise wird die Durchströmung des Fluidkanal 58 in Richtung des dritten Anschlusses 56 derart beeinflusst, dass das Dämpfungsverhalten des Druckregelventils 2 wesentlich verbessert wird. Insbesondere beim Öffnen des Ventils 2 wird auf diese Weise der Fluidmassendurchsatz langsam und nicht schlagartig erhöht.

Der Ventilkörper 40 wird durch die Vorspannkraft 28, die auf den Anker 24 wirkt, im nicht bestromten Zustand mit zwei Axialflächen 60 und 62 gegen die Ventilsitze 48 und 50 angedrückt, wodurch der Fluidkanal 58 verschlossen wird und dementsprechend lediglich eine fluidische Verbindung zwischen dem ersten Anschluss 52 und dem zweiten Anschluss 54 besteht. Im geöffneten Zustand ist der Fluidkanal 58 mit einer Kammer 64 verbunden, die wiederum mit dem dritten Anschluss 48 fluidisch verbunden ist.

Das erfindungsgemäße Druckregelventil 2 kann im vorliegenden Ausführungsbeispiel mit einer Schaltfrequenz von 300 Hz getaktet werden, was eine genaue Regelung ermöglicht. Während eines Taktes wird der Anker 24 mit dem Ventilverschlussglied 40 gemäß der gewählten Pulsweite von den Ventilsitzen 48 und 50 abgehoben, so dass der Fluidkanal 58 über die Kammer 64 mit dem dritten Anschluss 56 fluidisch verbunden ist, so dass der Luftstrom, der am ersten Anschluss anliegt, über den dritten Anschluss abströmen kann, so dass am zweiten Anschluss ein geringerer Druck anliegt. Es sollte deutlich sein, dass durch dieses erfindungsgemäße Druckregelventil 2 eine sehr genaue Druckregelung am zweiten Anschluss 54 in Abhängigkeit vom vorliegenden Ladedruck am ersten Anschluss 52 vorgenommen werden kann. Das Wastegate kann damit genauestens abgestimmt auf den jeweiligen Kennfeldbereich geöffnet oder geschlossen werden, um den Verbrennungsmotor optimal mit dem geeigneten Ladedruck zu versorgen.

## Patentansprüche

1. Druckregelsystem im Kfz-Bereich mit einer Druckquelle, einer druckgesteuerten Komponente und einer Druckquelle mit einem festen Druckniveau, wie beispielsweise Atmosphärendruck, einer Motorsteuerung und einem elektromagnetischen Druckregelventil zur Ansteuerung der druckgesteuerten Komponente mit einem Gehäuse (4), das einen ersten, mit der Druckquelle verbindbaren Anschluss (52), einen zweiten, mit der druckgesteuerten Komponente verbindbaren Anschluss (54) und einen dritten, mit einem festen Druckniveau, beispielsweise Atmosphärendruck, verbindbaren Anschluss (56), mindestens einen Ventilsitz (48) sowie einen elektromagnetischen Antrieb (10) aufweist, wobei der elektromagnetische Antrieb (10) aus einer auf einem Spulenträger (14) gewickelten Spule (12), einem Anker (24), einem Kern (16) und einer elektromagnetischen Rückschlusseinrichtung (18) aufgebaut ist, wobei der Anker (24) zwischen zwei Endlagen beweglich gelagert ist und zumindest indirekt auf ein Ventilverschlussglied (40) einwirkt, wobei Vorspannmittel (28) vorgesehen sind, die den Anker (24) und damit das Ventilverschlussglied (40) im nicht bestromten Zustand in einer Fail-Safe-Stellung an dem Ventilsitz (48) derart positionieren, das eine Verbindung vom dritten Anschluss (56) zum ersten und zweiten Anschluss (52, 54) verschlossen ist, wobei der erste und der zweite Anschluss (52, 54) fluidisch miteinander verbunden sind, wobei der eine Ventilsitz (48) derart ausgeführt ist, das dieser über einen Fluidkanal (58) mit dem ersten und zweiten Anschluss (52, 54) verbunden ist, derart, dass der erste und der zweite Anschluss (52, 54) in jedem Betriebszustand in fluidischer Verbindung stehen, wobei der Anker (24) derart ansteuerbar ist, dass dieser mittels der Motorsteuerung in jeder Position stufenlos zwischen den zwei Endlagen einstellbar ist, wobei das Ventilverschlussglied (40) eine erste Axialfläche (60) zur Anlage am Ventilsitz (48) und eine zweite Axialfläche (62), die beabstandet von der ersten Axialfläche (60) im Fluidkanal (58) angeordnet ist, aufweist, wobei die zweite Axialfläche (62) einen geringeren Durchmesser als die erste Axialfläche (60) aufweist.

2. Druckregelsystem nach Anspruch 1, **dadurch gekennzeichnet, dass** der Fluidkanal (58) sich in einem Bereich (50) in Richtung des Ventilsitzes (48) aufweitet, derart, dass der Ventilsitz (48) eine Durchströmfläche A₁ aufweist, die größer als eine Durchströmfläche A₂ des Fluidkanals (58) zu Beginn des Bereiches (50) ist.

3. Druckregelsystem nach einem der Ansprüche 1 oder 2, **dadurch gekennzeichnet, dass** das Gehäuse (4) im Wesentlichen zweiteilig mit einem Antriebsgehäuseteil (6) und einem Deckelteil (8), das den ersten, zweiten und dritten Anschluss (52, 54, 56) aufweist, ausgeführt ist, wobei zwischen den beiden Gehäuseteilen (6, 8) eine Membrane (44) angeordnet ist, die Teil des Ventilverschlussgliedes (40) ist und die erste und zweite Axialfläche (60, 62) ausbildet.

4. Druckregelsystem nach einem der Ansprüche 1 bis 3, **dadurch gekennzeichnet, dass** die Vorspannmittel (28) eine Feder umfassen, die am Kern (16) abgestützt ist.

5. Druckregelsystem nach Anspruch 4, **dadurch gekennzeichnet, dass** Mittel (34) zum Einstellen der Federkraft vorgesehen sind.

6. Druckregelsystem nach einem der vorherigen Ansprüche, **dadurch gekennzeichnet, dass** Mittel (34) zum Justieren der Magnetkraft vorgesehen sind.

7. Druckregelsystem nach Anspruch 6, **dadurch gekennzeichnet, dass** die Mittel (34) zum Justieren der Magnetkraft eine Justierschraube umfassen, die im Kern (16) mittels eines Gewindes oder einer Rändelung angeordnet ist.

8. Druckregelsystem nach Anspruch 5 in Verbindung mit Anspruch 7, **dadurch gekennzeichnet, dass** die Mittel (34) zum Einstellen der Federkraft durch die Justierschraube gebildet sind.

## Claims

1. A pressure-regulating system for use in the field of motor vehicles, comprising a pressure source, a pressure-controlled component and a pressure source having a fixed pressure level, e.g. atmospheric pressure, an engine control and an electromagnetic pressure-regulating valve for controlling the pressure-controlled component comprising a housing (4) having a first port (52) adapted to be connected to the pressure source, a second port (54) adapted to be connected to the pressure-controlled component, and a third port (56) adapted to be connected to a fixed pressure level, e.g. atmospheric pressure, at least one valve seat (48), as well as an electromagnetic drive (10), said electromagnetic drive (10) built from a coil (12) wound on a coil carrier (14), an armature (24), a core (16), and an electromagnetic return-path device (18), the armature (24) being mounted so as to be movable between two end positions and to act at least indirectly on valve closure member (40), wherein a biasing device (28) is provided which, when a current does not flow, positions the armature (24), and thereby the valve closure member (40), in a fail-safe setting on the valve seat (48) such that a connection from the third port (56) to each of the first and second ports (52, 54) is closed, the first and second ports (52, 54) being in a fluidic connection with each other, wherein the at least one valve seat (48) is formed such that the at least one valve seat is connected via a fluid channel (58) to the first and second ports (52, 54) such that the first and second ports (52, 54) are in a fluidic connection with each other in every operating state, the armature (24) being configured to be steplessly adjustable by the motor control between the two end positions in every setting, the valve closure member (40) comprising a first axial surface (60) which is configured to abut on the valve seat (48), and a second axial surface (62) which is arranged in the fluid channel (58) at a distance from the first axial surface (60), wherein the second axial surface (62) has a diameter that is smaller than the diameter of the first axial surface (60).

2. Pressure-regulating system as recited in claim 1, **characterized in that** the fluid channel (58) comprises a region (50) which is configured to flare in a direction of the valve seat (48) so that the valve seat (48) comprises a flow-through area A₁ which is larger than a flow-through area A₂ of the fluid channel (58) at a beginning of the region (50).

3. Pressure-regulating system as recited in one of claims 1 or 2, **characterized in that** the housing (4) is substantially of a bi-partite form comprising a drive housing part (6) and a cover part (8) comprising the first, the second, and the third port (52, 54, 56), a membrane (44) being arranged between the two housing parts (6, 8), the membrane being part of the valve closure member (40) and forming the first and the second axial surface (60, 62).

4. Pressure-regulating system as recited in one of claims 1 to 3, **characterized in that** the biasing device (28) comprises a spring configured to be supported at the core (16).

5. Pressure-regulating system as recited in claim 4, **characterized in that** means (34) are provided to adjust a spring force.

6. Pressure-regulating system as recited in one of the preceding claims, **characterized in that** means (34) are provided to adjust the magnetic force.

7. Pressure-regulating system as recited in claim 6, **characterized in that** the magnetic force adjusting means (34) comprise an adjusting screw arranged in the core (16) via a thread or a knurling.

8. Pressure-regulating system as recited in claim 5 in conjunction with claim 7, **characterized in that** the spring force adjusting means (34) are formed by the adjusting screw.

## Revendications

1. Système de commande de pression dans le domaine automobile avec une source de pression, un composant commandé par pression et une source de pression à niveau de pression fixe, par exemple la pression atmosphérique, une commande de moteur et une soupape de commande de pression électromagnétique pour commander le composant commandé par pression, avec un carter (4) comprenant un premier port (52) apte à être raccordé à la source de pression, un deuxième port (54) apte à être raccordé au composant commandé par pression, et un troisième port (56) apte à être raccordé à un niveau de pression fixe, par exemple la pression atmosphérique, au moins un siège de soupape (48) ainsi qu'un entrainement électromagnétique (10), ledit entraînement électromagnétique (10) étant formé par une bobine (12) enroulée sur un porte-bobine (14), une armature (24), un noyau (16) et un moyen de retour de flux (18) électromagnétique, ladite armature (24) étant supportée de manière mobile entre deux positions finales et agissant au moins indirectement sur un élément de fermeture de soupape (40), des moyens de précontrainte (28) étant prévus qui positionnent l'armature (24), et ainsi l'élément de fermeture de soupape (40), dans une position fail-safe sur le siège de soupape (48) dans l'état non alimenté en courant d'une manière qu'une connexion entre le troisième port (56) et le premier et le deuxième port (52, 54) est fermée, ledit premier et ledit deuxième port (52, 54) étant en liaison fluidique l'un avec l'autre, ledit un siège de soupape (48) étant configuré de manière que celui-ci est lié au premier et au deuxième port (52, 54) par un canal de fluide (58), de sorte que le premier et le deuxième port (52, 54) sont en liaison fluidique en tout état d'opération, ladite armature (24) étant apte à être commandée de sorte que celle-ci peut être ajustée, en toute position, de manière continue entre les deux positions finales par la commande de moteur, ledit élément de fermeture de soupape (40) comprenant une première surface axiale (60) pour rester sur le siège de soupape (48) et une deuxième surface axiale (62) disposée à distance de la première surface axiale (60) dans ledit canal de fluide (58), ladite deuxième surface axiale (62) ayant un diamètre inférieur à celui de la première surface axiale (60).

2. Système de commande de pression selon la revendication 1, **caractérisé en ce que**, dans une partie (50), le canal de fluide (58) s'évase vers le siège de soupape (48) de sorte que le siège de soupape (48) a une surface d'écoulement A₁ supérieure à la surface d'écoulement A₂ du canal de fluide (58) au début de ladite partie (50).

3. Système de commande de pression selon l'une des revendications 1 ou 2, **caractérisé en ce que** le boitier (4) est sensiblement bipartite avec une partie de boitier d'entrainement (5) et une partie de couvercle (8) comprenant le premier, le deuxième et le troisième port (52, 54, 56), une membrane (44) étant disposée entre les deux parties de boitier (6, 8), la membrane formant partie dudit élément de fermeture de soupape (40) et formant la première et la deuxième surface axiale (60, 62).

4. Système de commande de pression selon l'une des revendications 1 à 3, **caractérisé en ce que** les moyens de précontrainte (28) comprennent un ressort supporté sur le noyau (16).

5. Système de commande de pression selon la revendication 4, **caractérisé en ce que** des moyens (34) pour l'ajustage de la force du ressort sont prévus.

6. Système de commande de pression selon l'une quelconque des revendications précédentes, **caractérisé en ce que** des moyens (34) pour l'ajustage de la force magnétique sont prévus.

7. Système de commande de pression selon la revendication 6, **caractérisé en ce que** les moyens (34) pour l'ajustage de la force magnétique comprennent une vis d'ajustage disposée dans le noyau (16) à l'aide d'un filetage ou un moletage.

8. Système de commande de pression selon la revendication 5 en combinaison avec la revendication 7, **caractérisé en ce que** les moyens (34) pour l'ajustage de la force du ressort sont formés par la vis d'ajustage.
